# EUROPEAN PATENT APPLICATION

(11) **EP 3 395 902 A1**
(43) Date of publication of application: **31.10.2018**
(21) Application number: 16878588.9
(22) Date of filing: 16.12.2016
(51) Int. Cl.: C08L 77/00, C08K 5/20, C08L 77/02, C08L 77/06

(54) **POLYAMIDE RESIN COMPOSITION INCLUDING CARBOXYLIC ACID DERIVATIVE**

(30) Priority: 25.12.2015 JP 2015254921
(71) Applicant: Nissan Chemical Corporation, Tokyo (JP)
(72) Inventor: ODAKA, Kazutoshi, Funabashi-shi Chiba 274-0052 (JP)
(74) Representative: Hoffmann Eitle
(86) International application number: PCT/JP2016/087668
(87) International publication number: WO 2017/110699

(57) **Abstract**

There is provided a polyamide resin composition including a crystal nucleating agent that is suitable for promotion of crystallization of a polyamide resin and does not cause coloring of the resin, the polyamide resin composition having the crystallization rate higher than that of the polyamide resin and capable of improving the higher molding processability and heat resistance. A polyamide resin composition including a polyamide resin and a crystal nucleating agent containing a carboxylic acid derivative of formula [1]: B¹-L¹-A-L²-B² [1]
wherein A is a C₁₋₆ alkylene group optionally having a substituent or a C₆₋₁₀ divalent aromatic group optionally having a substituent, B¹ and B² are each independently a C₃₋₆ cycloalkyl group optionally having a substituent or a C₆₋₁₀ aromatic group optionally having a substituent, and L¹ and L² are each independently -C(=O)NR¹- or -C(=O)O-.

## Description

### TECHNICAL FIELD

The present invention relates to a polyamide resin composition, and in particular, a polyamide resin composition including a crystal nucleating agent containing a carboxylic acid derivative and a polyamide resin molded body obtained from the resin composition.

### BACKGROUND ART

In general, a polyamide resin is widely used as an engineering plastic having excellent mechanical properties, chemical resistance, and oil resistance. In particular, polyamide 11 and polyamide 12 have excellent properties such as chemical resistance, impact resistance, cold impact resistance, and low water absorption property. Therefore, polyamide 11 and polyamide 12 are expected, for example, as molding materials for a food container, a bearing, a connector, fuel tube and hose for an automobile, an interior material, and housing and part of an electric or electronic product.

However, the crystallization rate of the polyamide resin is low. Therefore, the polyamide resin has such a disadvantage that the polyamide resin is softened at a temperature equal to or higher than the glass transition point (Tg) in a state where the polyamide resin is not sufficiently crystallized. When the polyamide resin is heated (annealed) at a predetermined temperature in a die during injection molding, the degree of crystallinity of the polyamide resin is improved. However, the molding cycle property of the polyamide resin is deteriorated due to low crystallization rate. Therefore, the polyamide resin has a problem with productivity. When crystallization is performed using only the polyamide resin, a spherulite is grown to a size equal to or more than the wavelength of light causing light scattering. This causes deterioration of appearance (opacity) and mechanical characteristics of a molded product.

In order to solve the problems, a method for adding a crystal nucleating agent to a polyamide resin has been investigated. The crystal nucleating agent forms a primary crystal nucleator for a crystallizable polymer, and acts to promote crystal growth, make the spherulite size fine, and promote crystallization.

As a crystal nucleating agent for a polyamide resin, talc, a metal salt of fatty acid (Patent Document 1), layered silicate (Patent Document 2), and the like, have been disclosed.

### Prior Art Documents

### Patent Documents

Patent Document 1: Japanese Patent Application Publication No. 2004-299395 (JP 2004-299395 A)
Patent Document 2: International publication WO2006/046571

### SUMMARY OF THE INVENTION

### Problem to be Solved by the Invention

As described above, various crystal nucleating agents for increasing the crystallization rate of a polyamide resin have been proposed. In recent years, a further effective crystal nucleating agent that improves the higher molding processability and heat resistance of a polyamide resin and does not disturb coloring or transparency for enhancing design is desired.

Therefore, an object of the present invention is to provide a polyamide resin composition including a crystal nucleating agent that is suitable for promotion of crystallization of a polyamide resin and does not cause coloring of the resin, the polyamide resin composition having the crystallization rate higher than that of the polyamide resin and capable of improving the higher molding processability and heat resistance, and a polyamide resin molded body obtained by crystallization of the polyamide resin composition.

### Means for Solving the Problems

The present inventors have intensively studied to achieve the object, and have found that when a specific carboxylic acid derivative is added as a crystal nucleating agent to a polyamide resin, crystallization of the polyamide resin can be promoted.

Specifically, a first aspect of the present invention relates to a polyamide resin composition including a polyamide resin and a a crystal nucleating agent containing a carboxylic acid derivative of formula [1]:

B¹-L¹-A-L²-B² [1]

(wherein A is a C₁₋₆ alkylene group optionally having a substituent or a C₆₋₁₀ divalent aromatic group optionally having a substituent, B¹ and B² are each independently a C₃₋₆ cycloalkyl group optionally having a substituent or a C₆₋₁₀ aromatic group optionally having a substituent, and L¹ and L² are each independently -C(=O)NR¹- (wherein R¹ is a hydrogen atom or a C₁₋₆ alkyl group) or -C(=O)O-).

A second aspect of the present invention relates to the polyamide resin composition according to the first aspect, wherein at least one of L¹ and L² is -C(=O)NR¹- (wherein R¹ has the same meaning as described above).

A third aspect of the present invention relates to the polyamide resin composition according to the second aspect, wherein L¹ and L² are -C(=O)NR¹- (wherein R¹ has the same meaning as described above).

A fourth aspect of the present invention relates to the polyamide resin composition according to any one of the first to third aspects, wherein A is a linear or branched alkylene group having a carbon atom number of 1 to 6 or a divalent aromatic group of formula [2]: 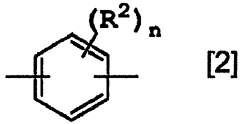 (wherein R² is a C₁₋₆ alkyl group, a C₂₋₇ acyl group, a C₂₋₇ alkoxycarbonyl group, an amino group, a C₁₋₆ acylamino group, a hydroxy group, or a C₁₋₆ alkoxy group, and n is an integer of 0 to 4 (when n is 2 or more, R²s are optionally the same as or different from each other)).

A fifth aspect of the present invention relates to the polyamide resin composition according to the fourth aspect, wherein A is an ethylene group, a trimethylene group, or a tetramethylene group.

A sixth aspect of the present invention relates to the polyamide resin composition according to the fourth aspect, wherein A is a p-phenylene group.

A seventh aspect of the present invention relates to the polyamide resin composition according to any one of the first to sixth aspects, wherein B¹ and B² are a cycloalkyl group of formula [3] or a monovalent aromatic group of formula [4]: 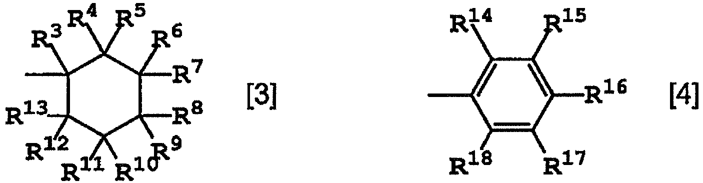 (wherein R³ to R¹⁸ are each independently a hydrogen atom, a C₁₋₆ alkyl group, a C₂₋₇ acyl group, a C₂₋₇ alkoxycarbonyl group, an amino group, a C₁₋₆ acylamino group, a hydroxy group, or a C₁₋₆ alkoxy group).

An eighth aspect of the present invention relates to the polyamide resin composition according to the seventh aspect, wherein B¹ and B² are a monovalent aromatic group of formula [5]: 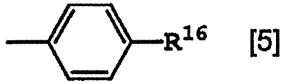 (wherein R¹⁶ has the same meaning as described above).

A ninth aspect of the present invention relates to the polyamide resin composition according to any one of the first to eighth aspects, wherein a content of the crystal nucleating agent is 0.001 to 10 parts by mass relative to 100 parts by mass of the polyamide resin.

A tenth aspect of the present invention relates to the polyamide resin composition according to any one of the first to ninth aspects, wherein the polyamide resin includes at least one selected from the group consisting of polyamide 6, polyamide 11, polyamide 12, polyamide 46, polyamide 66, polyamide 610, polyamide 612, polyamide 1010, polyamide 1212, polyamide 4T, polyamide M5T, polyamide 6T, polyamide 61, polyamide 9T, polyamide 10T, and polyamide MXD6.

An eleventh aspect of the present invention relates to the polyamide resin composition according to the tenth aspect, wherein the polyamide resin includes at least polyamide 11 or polyamide 12.

A twelfth aspect of the present invention relates to a polyamide resin molded body obtained by crystallization of the polyamide resin composition according to any one of the first to eleventh aspects.

### Effects of the Invention

In a polyamide resin composition of the present invention, an effect of promoting crystallization of a polyamide resin is improved by using a specific carboxylic acid derivative as a crystal nucleating agent. Accordingly, the present invention can provide a polyamide resin composition having excellent molding processability, heat resistance, and colorability (or transparency), and a polyamide resin molded body obtained by crystallization of the polyamide resin composition.

### MODES FOR CARRYING OUT THE INVENTION

Hereinafter, the present invention will be described in further detail.

### <Polyamide Resin Composition>

The polyamide (hereinafter also referred to as PA) resin composition of the present invention includes a PA resin and a crystal nucleating agent containing a carboxylic acid derivative.

### [PA Resin]

Examples of the PA resin used in the present invention include a PA resin obtained from diamine and dibasic acid, a PA resin obtained from lactam or aminocarboxylic acid, and a PA resin obtained from a copolymer of two or more of them.

Examples of the diamine include an aliphatic diamine such as tetramethylenediamine, hexamethylenediamine, octamethylenediamine, nonamethylenediamine, undecamethylenediamine, and dodecamethylenediamine; and diamine having an aromatic cyclic structure, such as methaxylylenediamine.

Examples of the dicarboxylic acid include an aliphatic dicarboxylic acid such as adipic acid, heptanedicarboxylic acid, octanedicarboxylic acid, nonanedicarboxylic acid, undecanedicarboxylic acid, and dodecanedicarboxylic acid; and a dicarboxylic acid having an aromatic cyclic structure, such as terephthalic acid and isophthalic acid.

Examples of the lactam include C₆₋₁₂ lactam such as γ-butyrolactam, ε-caprolactam, ω-heptalactam, and α-laurolactam.

Examples of the aminocarboxylic acid include a C₆₋₁₂ aminocarboxylic acid such as ε-aminocaproic acid, 7-aminoheptanoic acid, 11-aminoundecanoic acid, and 12-aminododecanoic acid.

Specific examples of the PA resin include a homopolymer such as polyamide 6, polyamide 11, polyamide 12, polyamide 46, polyamide 66, polyamide 610, polyamide 612, polyamide 1010, polyamide 1212, polyamide 4T, polyamide M5T, polyamide 6T, polyamide 61, polyamide 9T, polyamide 10T, and polyamide MXD6; and a copolymer such as polyamide 6/66, polyamide 6/12, and polyamide 11/12. Among these, polyamide 11 and polyamide 12 are preferable.

One kind of the PA resin may be used alone, or two or more kinds thereof may be used in combination.

As the PA resin, a commercially available PA resin can be suitably used. Examples thereof include Rilsan (registered trademark) series, Pebax (registered trademark) series, and Hiprolon series available from ARKEMA K.K., DIAMID series and VESTAMID (registered trademark) series available from Daicel-Evonik Ltd., AMILAN series available from Toray Industries, Inc., UBE NYLON series and UBESTA series available from Ube Industries, Ltd., GLAMIDE (registered trademark) series available from TOYOBO CO., LTD., GENESTAR series available from KURARAY CO., LTD., Ultramid (registered trademark) available from BASF, and ARLEN series available from Mitsui Chemicals, Inc.

The PA resin used in the present invention may be a blended polymer of a PA homopolymer or a PA copolymer as a main component, with another resin. Examples of the other resin include a general-purpose thermoplastic resin/thermoplastic engineering plastic described below, and a biodegradable resin. The content of the other resin in the blended polymer with the other resin is preferably 50% by mass or less.

Examples of the general-purpose thermoplastic resin/thermoplastic engineering plastic include a polyolefin resin such as polyethylene (PE), a polyethylene copolymer, polypropylene (PP), a polypropylene copolymer, an ethylene-propylene copolymer, polybutylene (PB), an ethylene-vinyl alcohol copolymer (EVOH), an ethylene-vinyl acetate copolymer (EVA), an ethylene-ethyl acrylate copolymer (EEA), and poly(4-methyl-1-pentene); a polystyrene resin such as polystyrene (PS), high-impact polystyrene (HIPS), an acrylonitrile-styrene copolymer (AS), an acrylonitrile-butadiene-styrene copolymer (ABS), and methyl methacrylate-styrene copolymer (MS); a (meth)acrylic resin such as poly(methyl methacrylate) (PMMA); a polyvinyl chloride) resin; a poly(vinylidene chloride) resin; a polyurethane resin; a polyester resin such as poly(ethylene terephthalate) (PET), poly(butylene terephthalate)

(PBT), poly(ethylene naphthalate) (PEN), and poly(butylene naphthalate) (PBN); a polyimide resin; a polycarbonate resin; a poly(phenylene ether) resin; a modified poly(phenylene ether) resin; a polyacetal resin; a polysulfone resin; and a poly(phenylene sulfide) resin.

Examples of the biodegradable resin include poly(hydroxyalkanoic acid) such as poly(glycolic acid) (PGA), poly(lactic acid) (PLA), poly(3-hydroxybutyric acid) (PHB), and a copolymer of 3-hydroxybutyric acid with 3-hydroxyhexanoic acid (PHBH); a polyester resin such as polycaprolactone, poly(butylene succinate), poly(butylene succinate/adipate), poly(butylene succinate/carbonate), poly(ethylene succinate), and poly(ethylene succinate/adipate); poly(vinyl alcohol); modified starch; cellulose acetate; chitin; chitosan; and lignin.

[Crystal Nucleating Agent containing Carboxylic Acid Derivative]

The crystal nucleating agent used in the present invention contains a carboxylic acid derivative of formula [1]:

B¹-L¹-A-L²-B² [1]

In formula [1], L¹ and L² are each independently -C(=O)NR¹- (wherein R¹ is a hydrogen atom or a C₁₋₆ alkyl group) or -C(=O)O-. It is preferable that at least one of L¹ and L² be -C(=O)NR¹-. It is more preferable that both L¹ and L² be -C(=O)NR¹-.

A side in which -C(=O)NR¹- and -C(=O)O- are bonded to A may be a C(=O) side, a NR¹ side, or an O side. For example, when L¹ is -C(=O)NR¹-, both B¹-C(=O)NR¹-A-L²-B² and B¹-NR¹C(=O)-A-L²-B² are included in the carboxylic acid derivative in the present invention. When L¹ is -C(=O)O-, both B¹-C(=O)O-A-L²-B² and B¹-OC(=O)-A-L²-B² are included in the carboxylic acid derivative in the present invention.

Herein, examples of the C₁₋₆ alkyl group of R¹ include methyl group, ethyl group, n-propyl group, isopropyl group, n-butyl group, isobutyl group, sec-butyl group, tert-butyl group, n-pentyl group, isopentyl group, neopentyl group, n-hexyl group, and cyclohexyl group.

R¹ is preferably a hydrogen atom.

In formula [1], A is a C₁₋₆ alkylene group optionally having a substituent or a C₆₋₁₀ divalent aromatic group optionally having a substituent.

Herein, examples of the C₁₋₆ alkylene group of A include a linear or branched alkylene group such as methylene group, ethylene group, trimethylene group, methylethylene group, tetramethylene group, 1-methyltrimethylene group, pentamethylene group, 2,2-dimethyltrimethylene group, and hexamethylene group; and a cyclic alkylene group such as cyclopropane-1,2-diyl group, cyclobutane-1,2-diyl group, cyclobutane-1,3-diyl group, cyclopentane-1,2-diyl group, cyclopentane-1,3-diyl group, cyclohexane-1,2-diyl group, cyclohexane-1,3-diyl group, and cyclohexane-1,4-diyl group. In particular, the linear or branched alkylene group is preferable.

Examples of the C₆₋₁₀ divalent aromatic group of A include phenylene group such as o-phenylene group, m-phenylene group, and p-phenylene group; and naphthalenediyl group such as naphthalene-1,4-diyl group, naphthalene-1,5-diyl group, and naphthalene-2,6-diyl group. Among these, the phenylene group is preferable.

Examples of the substituent group that may be included in the C₁₋₆ alkylene group and the C₆₋₁₀ divalent aromatic group include a C₁₋₆ alkyl group, a C₂₋₇ acyl group, a C₂₋₇ alkoxycarbonyl group, amino group, a C₁₋₆ acylamino group, hydroxy group, and a C₁₋₆ alkoxy group. Specific examples thereof include the same groups as those exemplified as R² described below.

A is preferably the linear or branched alkylene group or the divalent aromatic group of formula [2], and particularly preferably ethylene group, trimethylene group, tetramethylene group, or p-phenylene group.

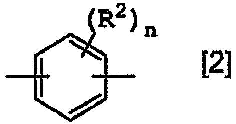

In Formula [2], R² is a C₁₋₆ alkyl group, a C₂₋₇ acyl group, a C₂₋₇ alkoxycarbonyl group, an amino group, a C₁₋₆ acylamino group, a hydroxy group, or a C₁₋₆ alkoxy group.

Herein, examples of the C₁₋₆ alkyl group of R² include the same groups as those exemplified as R¹ described above.

Examples of the C₂₋₇ acyl group of R² include a group in which a carbonyl group is bonded to a C₁₋₆ alkyl group, that is, acetyl group, propionyl group, butyryl group, isobutyryl group, pentanoyl group, 2-methylbutanoyl group, 3-methylbutanoyl group, pivaloyl group, n-hexanoyl group, 4-methylpentanoyl group, 3,3-dimethylbutanoyl group, heptanoyl group, and cyclohexanecarbonyl group.

Examples of the C₂₋₇ alkoxycarbonyl group of R² include a group in which a carbonyl group is bonded to a C₁₋₆ alkoxy group, that is, methoxycarbonyl group, ethoxycarbonyl group, n-propoxycarbonyl group, isopropoxycarbonyl group, n-butoxycarbonyl group, isobutoxycarbonyl group, sec-butoxycarbonyl group, tert-butoxycarbonyl group, n-pentyloxycarbonyl group, isopentyloxycarbonyl group, neopentyloxycarbonyl group, n-hexyloxycarbonyl group, and cyclohexyloxycarbonyl group.

Examples of the C₁₋₆ acylamino group of R² include acetamido group, propionamido group, butyramido group, isobutylamido group, pentaneamido group, 2-methylbutaneamido group, 3-methylbutaneamido group, pivalamido group, n-hexaneamido group, 4-methylpentaneamido group, 3,3-dimethylbutaneamido group, heptaneamido group, and cyclohexanecarboxamido group.

Examples of the C₁₋₆ alkoxy group of R² include methoxy group, ethoxy group, n-propoxy group, isopropoxy group, n-butoxy group, isobutoxy group, sec-butoxy group, tert-butoxy group, n-pentyloxy group, isopentyloxy group, neopentyloxy group, n-hexyloxy group, and cyclohexyloxy group.

In formula [2], n is an integer of 0 to 4, and preferably 0. When n is 2 or more, R²s may be the same as or different from each other.

In formula [1], B¹ and B² are each independently a C₃₋₆ cycloalkyl group optionally having a substituent or a C₆₋₁₀ aromatic group optionally having a substituent.

Herein, examples of the C₃₋₆ cycloalkyl group of B¹ and B² include cyclopropyl group, cyclobutyl group, cyclopentyl group, and cyclohexyl group.

Examples of the C₆₋₁₀ aromatic group of B¹ and B² include phenyl group and naphthyl group.

Examples of the substituent group that may be included in the C₃₋₆ cycloalkylene group and the C₆₋₁₀ aromatic group include a C₁₋₆ alkyl group, a C₂₋₇ acyl group, a C₂₋₇ alkoxycarbonyl group, amino group, a C₁₋₆ acylamino group, hydroxy group, and a C₁₋₆ alkoxy group. Specific examples thereof include the same groups as those exemplified as R² described above.

B¹ and B² are preferably a cycloalkyl group of formula [3] or a monovalent aromatic group of formula [4], and particularly preferably a group of formula [5].

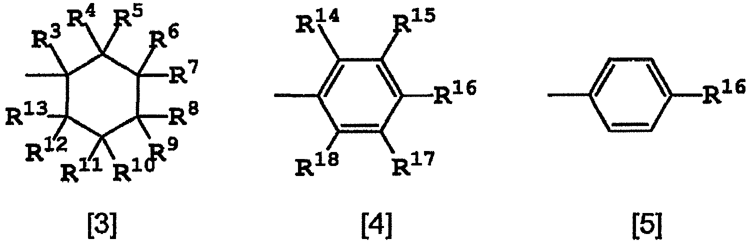

In formulae [3] to [5], R³ to R¹⁸ are each independently a hydrogen atom, a C₁₋₆ alkyl group, a C₂₋₇ acyl group, a C₂₋₇ alkoxycarbonyl group, an amino group, a C₁₋₆ acylamino group, a hydroxy group, or a C₁₋₆ alkoxy group.

Herein, examples of the C₁₋₆ alkyl group, C₂₋₇ acyl group, C₂₋₇ alkoxycarbonyl group, C₁₋₆ acylamino group, and C₁₋₆ alkoxy group of R³ to R¹⁸ include the same groups as those exemplified as R² described above.

Examples of such groups of B¹ and B² include cyclohexyl group, methylcyclohexyl group, tert-butylcyclohexyl group, acetylcyclohexyl group, methoxycarbonylcyclohexyl group, ethoxycarbonylcyclohexyl group, aminocyclohexyl group, acetamidocyclohexyl group, hydroxycyclohexyl group, methoxycyclohexyl group, ethoxycyclohexyl group, tert-butoxycyclohexyl group, phenyl group, tolyl group, dimethylphenyl group, tert-butylphenyl group, acetylphenyl group, propionylphenyl group, methoxycarbonylphenyl group, ethoxycarbonylphenyl group, aminophenyl group, acetamidophenyl group, propionamidophenyl group, hydroxyphenyl group, methoxyphenyl group, ethoxyphenyl group, and tert-butoxyphenyl group. Among these, 4-acetylphenyl group and 4-acetamidophenyl group are preferable.

A method for producing the carboxylic acid derivative of formula [1] is not particularly limited. The carboxylic acid derivative can be easily obtained by amidation or esterification of carboxylic acid or an activator thereof (acid halide, acid anhydride, acid azide, active ester, or the like) with amine or alcohol by a conventionally known method.

For example, when L¹ and L² are -C(=O)NR¹-, that is, a carboxylic acid derivative that forms an amide bond, specific examples of the method include methods shown in schemes [6] and [7].

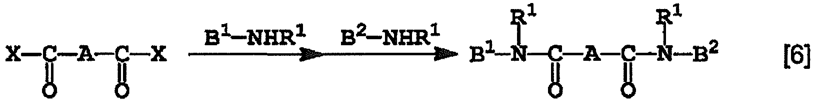

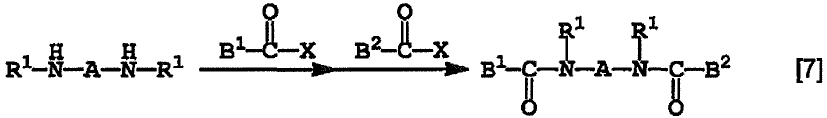

In schemes [6] and [7], A, B¹, B², and R¹ have the same meanings as described above. X is not particularly limited as long as it is a group capable of producing an amide bond, and examples thereof include hydroxy group; alkoxy group such as methoxy group and ethoxy group; a halogen atom such as a chlorine atom and a bromine atom; acyloxy group such as acetxy group; azido group; and 2,5-dioxopyirolidin-1-yloxy group. When B¹ and B² are different groups, one of them may be first reacted followed by a reaction with the other, or both may be simultaneously reacted.

When L¹ and L² are -C(=O)O-, that is, a carboxylic acid derivative that forms an ester bond, specific examples of the method include methods shown in schemes [8] and [9].

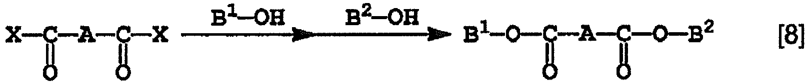

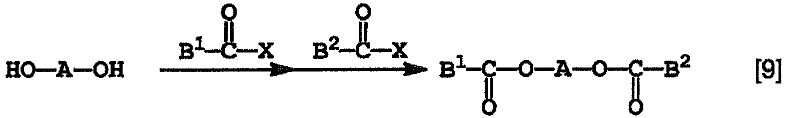

In schemes [8] and [9], A, B¹, and B² have the same meanings as described above. X is not particularly limited as long as it is a group capable of producing an ester bond, and examples thereof include hydroxy group; alkoxy group such as methoxy group and ethoxy group; a halogen atom such as a chlorine atom and a bromine atom; acyloxy group such as acetoxy group; azido group; and 2,5-dioxopyrrolidin-1-yloxy group. When B¹ and B² are different groups, one of them may be first reacted followed by a reaction with the other, or both may be simultaneously reacted.

Similarly, a carboxylic acid derivative in which L¹ and L² are different from each other can be obtained.

A commercially available product can be used when the carboxylic acid derivative of formula [1] is commercially available.

The addition amount of the crystal nucleating agent containing the carboxylic acid derivative is 0.001 to 10 parts by mass, preferably 0.01 to 5 parts by mass, and more preferably 0.1 to 2 parts by mass, relative to 100 parts by mass of the PA resin. When the addition amount is 0.001 parts by mass or more, sufficient crystallization rate can be achieved. Even when the addition amount is more than 10 parts by mass, the crystallization rate is not further increased. Therefore, use of 10 parts by mass or less of the crystal nucleating agent is economically advantageous.

### [Other Additive]

The PA resin composition of the present invention may include a known inorganic filler as long as the effects of the present invention are not impaired. Examples of the inorganic filler include glass fibers, carbon fibers, talc, mica, silica, kaolin, clay, wollastonite, glass beads, glass flakes, potassium titanate, calcium carbonate, magnesium sulfate, and titanium oxide. The form of these inorganic fillers may be any of fibrous, granular, plate-like, needle-like, spherical, and powdery. The inorganic filler can be used in an amount of 300 parts by mass or less relative to 100 parts by mass of the PA resin.

The PA resin composition of the present invention may include a known flame retardant as long as the effects of the present invention are not impaired.

Examples of the flame retardant include a halogen-based flame retardant such as a bromine-based flame retardant and a chlorine-based flame retardant; an antimony-based flame retardant such as antimony trioxide and antimony pentoxide; an inorganic flame retardant such as aluminum hydroxide, magnesium hydroxide, and a silicone-based compound; a phosphorus-based flame retardant such as red phosphorus, a phosphate ester, ammonium polyphosphate, and phosphazene; a melamine-based flame retardant such as melamine, melam, melem, melon, melamine cyanurate, melamine phosphate, melamine pyrophosphate, melamine polyphosphate, melamine / melam / melem double polyphosphate, melamine alkylphosphonate, melamine phenylphosphonate, melamine sulfate, and melam methanesufonate; and a fluororesin such as PTFE. The flame retardant can be used in an amount of 200 parts by mass or less relative to 100 parts by mass of the PA resin.

Further, the PA resin composition of the present invention may appropriately include an additive that is generally added, if necessary, as long as the effects of the present invention are not impaired. For example, the additives includes an end-capping agent, a hydrolysis inhibitor, a thermal stabilizer, a photostabilizer, a heat absorber, an ultraviolet absorber, an antioxidant, an impact modifier, a plasticizer, a compatibilizer, various types of coupling agents such as a silane-based coupling agent, a titanium-based coupling agent, and an aluminum-based coupling agent, an foaming agent, an antistat, a release agent, a lubricant, an antibacterial antifungal agent, a pigment, a dye, a perfume, other various fillers, other crystal nucleating agents, and other thermoplastic resins.

### [Method for Producing Polyamide Resin Composition]

The PA resin composition of the present invention can be produced by mixing the PA resin with the crystal nucleating agent containing the carboxylic acid derivative. Examples of a method for mixing the PA resin with the crystal nucleating agent include, but not particularly limited to, a method for mixing the crystal nucleating agent in the PA resin or a composition including the PA resin and the other additives before molding, and a method for mixing the crystal nucleating agent in the PA resin or a composition including the PA resin and the other additives during molding (e.g., side feed). Further, the PA resin composition can be produced by mixing the crystal nucleating agent in a monomer of diamine and dicarboxylic acid or an activator thereof during production of the PA resin.

The cooling crystallization temperature (temperature at which a resin is crystallized in a process of cooling a resin composition in a melted state) Tcc of the PA resin composition of the present invention is preferably 155°C or higher, and more preferably 160°C or higher.

### <Polyamide Resin Molded Body>

The PA resin molded body of the present invention includes the crystallized PA resin and the crystal nucleating agent containing the carboxylic acid derivative. The spherulite diameter of the PA resin molded body of the present invention is preferably 30 µm or less, and more preferably 20 µm or less. When the spherulite diameter is 30 µm or less, a PA resin molded body having a smooth surface can be obtained.

In such a PA resin molded body, the PA resin composition of the present invention is used. For example, the PA resin molded body can be obtained by crystallization of the PA resin included in the PA resin composition of the present invention. A method for crystallizing the PA resin is not particularly limited. For example, the method may be a method in which the PA resin composition is heated to a temperature equal to or higher than the crystallization temperature in a process of molding of the PA resin composition into a predetermined shape, and then cooled. In the process, the PA resin composition is heated to a temperature equal to or higher than the crystallization temperature, and quenched to form a molded body with the amorphous state held, and the molded body is heated. Thus, crystallization can be achieved.

The PA resin molded body of the present invention has excellent mechanical strength and heat resistance.

When the PA resin composition of the present invention is molded, several molded products can be easily produced by using a common molding method such as general injection molding, blow molding, vacuum molding, and compression molding.

### Examples

Hereinafter, the present invention will be described more specifically with reference to Examples. However, the present invention is not limited to Examples described below.

Apparatuses and conditions used in preparation of samples and analysis of physical properties in Examples are as follows.

### (1) 5% Weight-Decrease Temperature (Td_{5%})

Apparatus: Thermo plus EVOII TG8120 manufactured by Rigaku Corporation
Measurement condition: in air atmosphere
Temperature-rising rate: 10°C/min (30 to 500°C)

### (2) Differential Scanning Calorimetry (DSC)

Apparatus: Diamond DSC manufactured by PerkinElmer Japan Co., Ltd.

### (3) Total Light Transmittance

Apparatus: HAZE meter NDH 5000 manufactured by NIPPON DENSHOKU INDUSTRIES CO., LTD.

### (4) Melt-kneading

Apparatus: Labo plastomill micro KF6V manufactured by Toyo Seiki Seisaku-sho, Ltd.

### (5) Hot Press

Apparatus: SA-302 Tabletop Test Press manufactured by TESTER SANGYO CO, LTD.

Abbreviations are as follows.
TEA: triethylamine [available from Tokyo Chemical Industry Co., Ltd.]
PA11: polyamide 11 [Rilsan (registered trademark) PA11 available from ARKEMAK.K.]
PA12: polyamide 12 [DIAMID L1600 Natural available from Daicel-Evonik Ltd.]
DMAc: N,N-dimethylacetamide
HFIPA: 1,1,1,3,3,3-hexafluoro-2-propanol

### [Production Example 1] Production of N¹,N⁴-bis(4-acetamidophenyl)succineamide

In a reaction flask equipped with a stirrer, a thermometer, a dropping funnel, and a condenser, 3.00 g (20 mmol) of 4-aminoacetanilide [available from Tokyo Chemical Industry Co., Ltd.], 2.02 g (20 mmol) of TEA, and 45.2 g (an amount of nine times the total amount of 4-aminoacetanilide and TEA) of DMAc were placed, and then cooled in an ice bath under stirring. To this solution, a solution in which 1.55 g (10 mmol) of succinyl chloride [available from Tokyo Chemical Industry Co., Ltd.] was dissolved in 14.0 g (an amount of nine times the amount of succinyl chloride) of DMAc was gradually added dropwise, and the mixture was stirred for three hours. To this reaction mixture, 3.6 g (200 mmol) of water was added dropwise, and unreacted succinyl chloride was quenched. The product was filtrated under reduced pressure, washed with 100 g of water-methanol mixed solution (mass ratio = 3:7), and dried, to obtain a target compound (compound A) as a white powder.

The 5% weight-decrease temperature (Td_{5%}) of the obtained target compound was 357.4°C.

### [Production Example 2] Production of N¹,N⁵-bis(4-acetamidophenyl)glutaramide

A target compound (compound B) was obtained as a white powder by operation in the same manner as in Production Example 1 except that succinyl chloride was changed to 1.69 g (10 mmol) of glutaryl chloride [available from Tokyo Chemical Industry Co., Ltd.] and the amount of water to be added in a post treatment was changed to 30 g.

The 5% weight-decrease temperature (Td_{5%}) of the obtained target compound was 342.4°C.

### [Production Example 3] Production of N¹,N⁶-bis(4-acetamidophenyl)adipamide

A target compound (compound C) was obtained as a white powder by operation in the same manner as in Production Example 1 except that succinyl chloride was changed to 1.83 g (10 mmol) of adipoyl chloride [available from Tokyo Chemical Industry Co., Ltd.].

The 5% weight-decrease temperature (Td_{5%}) of the obtained target compound was 356.3°C.

### [Production Example 4] Production of N¹,N⁴-bis(4-acetamidophenyl)terephthalamide

In a reaction flask equipped with a stirrer, a thermometer, a dropping funnel, and a condenser, 1.65 g (11 mmol) of 4-aminoacetanilide [available from Tokyo Chemical Industry Co., Ltd.], 1.00 g (9.9 mmol) of TEA, and 23.9 g (an amount of nine times the total amount of 4-aminoacetanilide and TEA) of DMAc were placed, and then cooled in an ice bath under stirring. To this solution, a solution in which 1.00 g (4.9 mmol) of terephthaloyl chloride [available from Tokyo Chemical Industry Co., Ltd.] was dissolved in 9.0 g (an amount of nine times the amount of terephthaloyl chloride) of DMAc was gradually added dropwise, and the mixture was stirred for three hours. The reaction mixture was added dropwise to 200 g (an amount of 6.1 times the total amount of used DMAc) of water-methanol mixed solution (mass ratio = 7:3), and a product in a slurry state was then precipitated. The obtained slurry was filtrated under reduced pressure, washed with a water-methanol mixed solution (mass ratio = 7:3), and dried, to obtain a target compound (compound D) as a white powder.

The 5% weight-decrease temperature (Td_{5%}) of the obtained target compound was 442.9°C.

### [Production Example 5] Production of N¹,N⁵-bis(4-acetylphenyl)glutaramide

A target compound (compound E) was obtained as a white powder by operation in the same manner as in Production Example 1 except that succinyl chloride was changed to 1.69 g (10 mmol) of glutaryl chloride [available from Tokyo Chemical Industry Co., Ltd.], 4-aminoacetanilide was changed to 2.70 g (20 mmol) of 4-aminoacetophenone [available from Tokyo Chemical Industry Co., Ltd.], and the amount of water to be added in a post treatment was changed to 30 g.

The 5% weight-decrease temperature (Td_{5%}) of the obtained target compound was 312.7°C.

### Examples 1 to 4

0.5 parts by mass of each of the compounds described in Table 1 was added as a crystal nucleating agent to 100 parts by mass of PA 12, and the mixture was melted and kneaded at 210°C and 150 rpm for one minute to obtain a polyamide resin composition.

The resin composition was placed between two brass plates of 180 mm × 120 mm × 2 mm in thickness with a polyimide film (spacer) having a thickness of 130 µm, and hot-pressed at 210°C and 25 kgf/cm² for one minute. Immediately after the hot-pressing, the film-shaped resin composition was taken off from the space between the brass plates, placed between other brass plates (having the same size as the above-described brass plates) at room temperature (about 23°C), and quenched. As a result, an amorphous film-shaped polyamide resin molded body including the crystal nucleating agent was obtained.

For the obtained amorphous film-shaped molded body, the cooling crystallization temperature (Tcc), the half crystallization time (t_{1/2}), and the total light transmittance were measured in accordance with the following procedures. The results are shown in Table 1.

### [Cooling Crystallization Temperature (Tcc)]

From the amorphous film-shaped molded body, 2 mg of film piece was cut out. This film piece was heated to 200°C at 100°C/min, then held at 200°C for one minute as it was, and cooled at 20°C/min by using a DSC. A temperature on a heat generation (crystallization enthalpy ΔHc) peak derived from crystallization of polyamide observed at that time was measured as a cooling crystallization temperature (Tcc). When Tcc is higher, the crystallization rate is higher under the same condition, and the excellent effect of the crystal nucleating agent is exerted.

### [Half Crystallization Time (t_{1/2})]

From the amorphous film-shaped molded body, 2 mg of film piece was cut out. This film piece was heated to 200°C at 100°C/min, held at 200°C for one minute as it was, then cooled to 160°C at 100°C/min, and held at 160°C as it was by using a DSC. At that time, a time required for heat generation (crystallization enthalpy ΔHc) derived from crystallization of polyamide to reach a peak after the temperature reached 160°C was measured as a half crystallization time (t_{1/2}). When t_{1/2} is shorter, the crystallization rate is higher under the same condition, and the excellent effect of the crystal nucleating agent is exerted.

### [Total Light Transmittance]

The total light transmittance was measured in accordance with JIS K7361-1:1997. When the total light transmittance is higher, the transparency is higher.

### Comparative Example 1

Operation and evaluation were carried out in the same manner as in Example 1 except that a crystal nucleating agent was not added. The results are also shown in Table 1.

### Comparative Example 2

Operation and evaluation were carried out in the same manner as in Example 1 except that a crystal nucleating agent was changed to talc [MICRO ACE P-8 available from Nippon Talc Co., Ltd.]. The results are also shown in Table 1.

### Comparative Example 3

Operation and evaluation were carried out in the same manner as in Example 1 except that a crystal nucleating agent was changed to carbon black [Mitsubishi Carbon Black #3030B available from Mitsubishi Chemical Corporation]. The results are also shown in Table 1.

### Comparative Example 4

Operation and evaluation were carried out in the same manner as in Example 1 except that a crystal nucleating agent was changed to copper phthalocyanine [Heliogen available from BASF]. The results are also shown in Table 1.

**Table 1**

| | Crystal nucleating agent | Tcc (°C) | t_{1/2} (min.) | total light transmittance (%) |
|---|---|---|---|---|
| Example 1 | Compound A | 156 | 0.50 | 91 |
| Example 2 | Compound B | 156 | 0.48 | 91 |
| Example 3 | Compound C | 156 | 0.43 | 91 |
| Example 4 | Compound D | 156 | 0.45 | 90 |
| Comparative Example 1 | None | 152 | 1.07 | 91 |
| Comparative Example 2 | Talc | 154 | 0.58 | 91 |
| Comparative Example 3 | Carbon black | 152 | 0.95 | 40 |
| Comparative Example 4 | Copper phthalocyanine | 158 | 0.30 | 33 |

As confirmed from the results in Table 1, the amorphous film-shaped molded bodies using the specific carboxylic acid derivatives (Examples 1 to 4) as a crystal nucleating agent represented high Tcc, short t_{1/2}, and equal or higher transparency as compared with the amorphous film-shaped molded body without a crystal nucleating agent (Comparative Example 1), the amorphous film-shaped molded body using talc (Comparative Example 2), and the amorphous film-shaped molded body using carbon black (Comparative Example 3), which have been conventionally used, and had an effect of promoting crystallization without deteriorating transparency. The amorphous film-shaped molded body using copper phthalocyanine as a crystal nucleating agent (Comparative Example 4) had an effect of promoting crystallization, but the transparency was largely deteriorated.

That is, when the specific carboxylic acid derivatives are each added as a crystal nucleating agent to a polyamide resin, a polyamide resin composition in which the transparency of the polyamide resin is maintained, the crystallization rate is high, and the heat resistance and the molding processability are excellent can be provided.

### Examples 5 and 6

0.5 parts by mass of compound described in Table 2 as a crystal nucleating agent and 2,000 parts by mass of HFIPA were added to 100 parts by mass of PA11, and the mixture was stirred at room temperature (about 23°C) for 30 minutes. From the obtained dispersion, HFIPA was distilled off by using an evaporator, to obtain a polyamide resin composition.

Operation was carried out in the same manner as in Example 1 except that this resin composition was used. A polyamide resin film-shaped molded body including the crystal nucleating agent in an amorphous state was thereby obtained.

For the obtained amorphous film-shaped molded body, the cooling crystallization temperature (Tcc) and the half crystallization time (T_{1/2}) were measured in accordance with the procedures described above. The results are shown in Table 2.

### Comparative Example 5

Operation and evaluation were carried out in the same manner as in Example 5 except that a crystal nucleating agent was not added. The results are also shown in Table 2.

**Table 2**

| | Crystal nucleating agent | Tcc (°C) | t_{1/2} (min.) |
|---|---|---|---|
| Example 5 | Compound D | 161 | 0.97 |
| Example 6 | Compound E | 162 | 0.85 |
| Comparative Example 5 | None | 159 | 2.25 |

As confirmed from the results in Table 2, the amorphous film-shaped molded bodies using the specific carboxylic acid derivatives (Examples 5 and 6) as a crystal nucleating agent represented high Tcc and short t_{1/2} as compared with the amorphous film-shaped molded body without a crystal nucleating agent (Comparative Example 5), and had an effect of promoting crystallization.

## Claims

1. A polyamide resin composition including a polyamide resin and a crystal nucleating agent containing a carboxylic acid derivative of formula [1]:
B¹-L¹-A-L²-B² [1]
(wherein A is a C₁₋₆ alkylene group optionally having a substituent or a C₆₋₁₀ divalent aromatic group optionally having a substituent, B¹ and B² are each independently a C₃₋₆ cycloalkyl group optionally having a substituent or a C₆₋₁₀ aromatic group optionally having a substituent, and L¹ and L² are each independently -C(=O)NR¹- (wherein R¹ is a hydrogen atom or a C₁₋₆ alkyl group) or -C(=O)O-).

2. The polyamide resin composition according to claim 1, wherein at least one of L¹ and L² is -C(=O)NR¹- (wherein R¹ has the same meaning as described above).

3. The polyamide resin composition according to claim 2, wherein L¹ and L² are -C(=O)NR¹- (wherein R¹ has the same meaning as described above).

4. The polyamide resin composition according to any one of claims 1 to 3, wherein A is a linear or branched alkylene group having a carbon atom number of 1 to 6 or a divalent aromatic group of formula [2]: 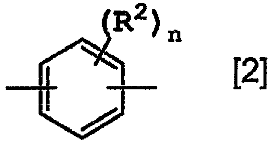 (wherein R² is a C₁₋₆ alkyl group, a C₂₋₇ acyl group, a C₂₋₇ alkoxycarbonyl group, an amino group, a C₁₋₆ acylamino group, a hydroxy group, or a C₁₋₆ alkoxy group, and n is an integer of 0 to 4 (when n is 2 or more, R²s are optionally the same as or different from each other)).

5. The polyamide resin composition according to claim 4, wherein A is an ethylene group, a trimethylene group, or a tetramethylene group.

6. The polyamide resin composition according to claim 4, wherein A is a p-phenylene group.

7. The polyamide resin composition according to any one of claims 1 to 6, wherein B¹ and B² are a cycloalkyl group of formula [3] or a monovalent aromatic group of formula [4]: 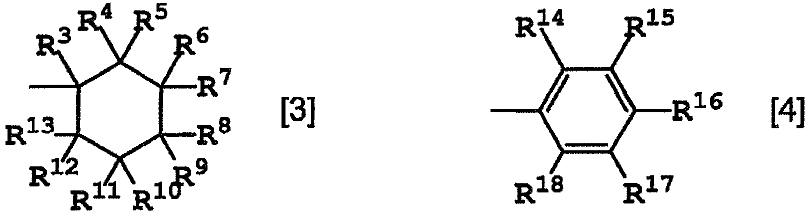 (wherein R³ to R¹⁸ are each independently a hydrogen atom, a C₁₋₆ alkyl group, a C₂₋₇ acyl group, a C₂₋₇ alkoxycarbonyl group, an amino group, a C₁₋₆ acylamino group, a hydroxy group, or a C₁₋₆ alkoxy group).

8. The polyamide resin composition according to claim 7, wherein B¹ and B² are a monovalent aromatic group of formula [5]: 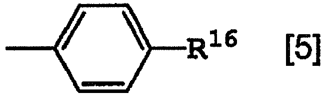 (wherein R¹⁶ has the same meaning as described above).

9. The polyamide resin composition according to any one of claims 1 to 8, wherein a content of the crystal nucleating agent is 0.001 to 10 parts by mass relative to 100 parts by mass of the polyamide resin.

10. The polyamide resin composition according to any one of claims 1 to 9, wherein the polyamide resin includes at least one selected from the group consisting of polyamide 6, polyamide 11, polyamide 12, polyamide 46, polyamide 66, polyamide 610, polyamide 612, polyamide 1010, polyamide 1212, polyamide 4T, polyamide M5T, polyamide 6T, polyamide 61, polyamide 9T, polyamide 10T, and polyamide MXD6.

11. The polyamide resin composition according to claim 10, wherein the polyamide resin includes at least polyamide 11 or polyamide 12.

12. A polyamide resin molded body obtained by crystallization of the polyamide resin composition according to any one of claims 1 to 11.
